(19) Europäisches Patentamt
European Patent Office
Office européen des brevets

(11) **EP 1 774 660 B1**

(12) **FASCICULE DE BREVET EUROPEEN**

(45) Date de publication et mention de la délivrance du brevet:
**13.10.2010 Bulletin 2010/41**

(21) Numéro de dépôt: **05778645.1**

(22) Date de dépôt: **17.06.2005**

(51) Int Cl.:
*H04B 1/10* ^(2006.01)

(86) Numéro de dépôt international:
**PCT/FR2005/001529**

(87) Numéro de publication internationale:
**WO 2006/024712 (09.03.2006 Gazette 2006/10)**

(54) **PROCEDE DE CONCEPTION D'UN FILTRE DE RECEPTION NUMERIQUE ET DISPOSITIF DE RECEPTION CORRESPONDANT**

VERFAHREN ZUR ENTWICKLUNG EINES DIGITALEN EMPFANGSFILTERS UND DAZUGEHÖRIGE EMPFANGSVORRICHTUNG

METHOD FOR DESIGNING A DIGITAL RECEPTION FILTER AND CORRESPONDING RECEIVING DEVICE

(84) Etats contractants désignés:
**AT BE BG CH CY CZ DE DK EE ES FI FR GB GR HU IE IS IT LI LT LU MC NL PL PT RO SE SI SK TR**

(30) Priorité: **02.08.2004 FR 0408538**

(43) Date de publication de la demande:
**18.04.2007 Bulletin 2007/16**

(73) Titulaire: **Wavecom**
**92442 Issy les Moulineaux Cedex (FR)**

(72) Inventeurs:
• **COUPAIN, Eric**
**F-92150 Suresnes (FR)**
• **ROUXEL, Alexandre**
**F-14920 Mathieu (FR)**

(74) Mandataire: **Bioret, Ludovic**
**Cabinet Vidon**
**16 B, rue de Jouanet - B.P. 90333**
**35703 Rennes Cedex 07 (FR)**

(56) Documents cités:
EP-A- 1 170 916          WO-A-03/036893
WO-A-2004/008705    GB-A- 2 344 494
US-A1- 2003 198 305   US-A1- 2004 022 335
US-A1- 2004 028 155    US-B1- 6 590 932

## Description

### 1. Domaine de l'invention

Le domaine de l'invention est celui des radiocommunications, et plus précisément de la réception d'un signal dans un système de radiocommunication.

Encore plus précisément, l'invention concerne une technique de conception de filtre et de filtrage d'un signal utile en présence de signaux interférents, et notamment une technique de filtrage adaptatif permettant une bonne qualité de réception avec un récepteur peu complexe.

L'invention trouve notamment des applications dans les systèmes de radiocommunication cellulaire de type GSM (« Global System for Mobile Communications », pour « système mondial de communications mobiles »), GSM/GPRS (« General Packet Radio Service » pour « système de radiocommunication par paquets »), GSM/GPRS/EDGE (« Enhanced Data rate for GSM Evolution », pour GSM évolué), et suivant.

### 2. Art antérieur

Classiquement, un récepteur dans un système de radiocommunication cellulaire comprend un filtre de réception permettant de sélectionner le canal principal lui étant alloué.

Cependant, la présence de trajets multiples entre un émetteur et un récepteur, ou encore la présence d'autres utilisateurs dans une même cellule, engendre des signaux interférents, nécessitant l'utilisation d'une technique complexe de filtrage en réception.

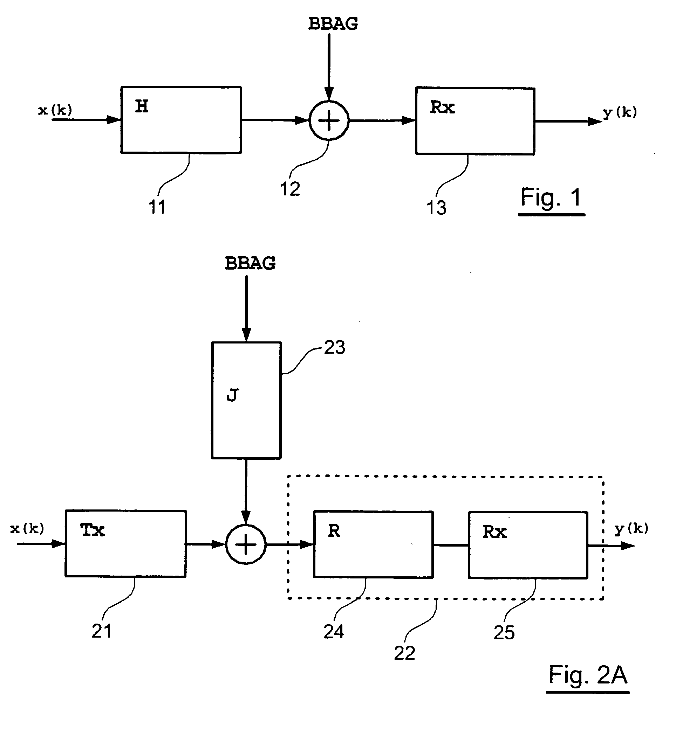

Une technique de filtrage basée sur un récepteur de type MMSE (de l'anglais « Minimum Mean Square Error » pour « minimisation de l'erreur quadratique moyenne ») a été envisagée, comme illustré en figure 1.

Selon cette technique de l'art antérieur, on considère un filtre de réception Rx 13 fixe. Ainsi, le filtre Rx 13 est conçu de manière à respecter un certain gabarit en fréquence.

Plus précisément, ce filtre de réception Rx 13 est adapté à éliminer la contribution d'un bruit additif blanc gaussien BBAG 12 ajouté en cours de transmission sur le signal utile x(k), le signal utile étant filtré par un filtre global H 11 représentatif des différents traitements effectués.

Le filtre de réception Rx 13 est alors conçu de sorte à minimiser l'erreur de décision entre le signal y(k) en sortie du filtre Rx 13 et le signal utile x(k) avant émission.

Ainsi, le filtre de réception Rx 13 de type MMSE tient compte du filtre global H 11, et est conçu de sorte à minimiser l'erreur quadratique moyenne en sortie de ce filtre Rx 13, définie par :

$$J(H) = \mathrm{E}\!\left[\left|x(k) - y(k)\right|^2\right],$$

où E[·] correspond à l'espérance mathématique.

Cependant, un inconvénient majeur de cette technique est que le filtre de réception n'est pas conçu en tenant compte du spectre des signaux interférents avec le signal utile, et ne réalise pas, par conséquent, le meilleur compromis entre l'interférence inter-symboles et inter-utilisateurs.

Ainsi, cette technique ne peut éliminer qu'une interférence inter-symbole limitée provenant des différents filtres, comme le filtre H 11, et ne tient pas compte des interférences provenant par exemple d'autres utilisateurs, encore appelées interférences co-canal ou adjacent.

Il est également connu du document US 6 590 932 une technique de réception d'un signal utile ayant subi des perturbations et de réduction de ces perturbations mettant en oeuvre un filtre de blanchiment.

Cependant, les coefficients de ce filtre de blanchiment doivent être précisément déterminés, ce qui nécessite une connaissance précise du canal de propagation.

Le document US 2004/0028155 présente également une technique de filtrage mise en oeuvre dans un récepteur, reposant sur une décomposition en une cascade de filtres.

Malheureusement, la structure en cascade de filtres, comprenant un filtre adapté au spectre de la modulation et un filtre de blanchiment estimé en tenant compte de la structure des signaux interférents dans la bande de fréquence du signal utile, n'est pas optimale en présence de signaux interférents.

### 3. Objectifs de l'invention

Il est donc souhaitable de construire un filtre de réception, dans un système de radiocommunication cellulaire, présentant une faible complexité et éliminant au moins en partie les signaux interférents dus aux autres utilisateurs, tout en présentant de bonnes performances.

Plus précisément, un objectif de l'invention est de fournir une technique de conception d'un filtre de réception, qui présente de bonnes performances, même en présence de signaux interférents. Notamment, l'invention a pour objectif de proposer une telle technique, qui permette de réduire, en réception, l'effet néfaste tant de l'interférence inter-symboles que de l'interférence inter-utilisateurs.

Un autre objectif de l'invention est de fournir une telle technique de conception qui soit simple et efficace, et qui permette la conception d'un filtre de réception robuste, adapté à la bande de base GSM/GPRS/EDGE.

Un objectif conséquent de l'invention est de fournir une technique de réception robuste vis-à-vis du canal de propagation d'un signal interférent, c'est-à-dire présentant de bonnes performances même lorsque le canal de propagation des signaux interférents varie.

Un autre objectif de l'invention est de proposer une technique de réception présentant une complexité réduite par rapport aux solutions de l'art antérieur, en présence de signaux interférents.

### 4. Caractéristiques essentielles de l'invention

Ces objectifs, ainsi que d'autres qui apparaîtront par la suite, sont atteints à l'aide d'un procédé de conception d'un filtre de réception numérique d'un signal utile.

Selon l'invention, un tel procédé comprend des étapes de :

- modélisation d'au moins un canal de transmission d'au moins un signal interférent avec ledit signal utile, de façon à obtenir un modèle de canal interférent ;
- blanchiment dudit au moins un signal interférent, au moyen d'un filtre de blanchiment tenant compte dudit modèle de canal interférent et d'un bruit sur ledit modèle, dit bruit de modèle ;
- calcul des coefficients dudit filtre de réception numérique à partir d'au moins un coefficient dudit filtre de blanchiment.

Ainsi, l'invention repose sur une approche tout à fait nouvelle et inventive de la conception d'un filtre de réception, mettant en oeuvre une étape de blanchiment permettant de blanchir au moins un signal interférent.

En effet, contrairement aux techniques de l'art antérieur qui n'envisageaient que le blanchiment d'un bruit additif blanc sur le signal utile, l'invention propose de tenir compte également des signaux interférents avec le signal utile, et met en oeuvre un blanchiment robuste de ces signaux. On notera que par « robuste », on entend ici que le filtre de réception construit selon le procédé de l'invention présente toujours de bonnes performances même lorsque le canal de propagation des signaux interférents varie.

Le canal de propagation correspond ici, et dans toute la suite du document, au canal physique entre un émetteur et un récepteur, tandis que le canal de transmission comprend à la fois le(s) filtre(s) d'émission, le canal de propagation et le(s) filtre(s) de réception.

Les signaux interférents sont par exemple émis dans la même bande de fréquence que le signal utile, ou émis dans une bande de fréquence adjacente à la bande de fréquence du signal utile, c'est-à-dire véhiculés par des canaux de propagation adjacents au canal de propagation du signal utile.

On peut remarquer que par canal adjacent, on entend le canal qui précède immédiatement (canal adjacent gauche) ou qui suit immédiatement (canal adjacent droit) le canal de propagation du signal utile, ainsi que les canaux bi-adjacents.

Ainsi, selon le procédé de conception de l'invention, on détermine les coefficients d'un filtre de réception en modélisant le canal de transmission (comprenant entre autres au moins un filtre d'émission, un canal de propagation et un filtre de réception), et en blanchissant les interférents. Le blanchiment des signaux interférents est mis en oeuvre à partir d'un filtre de blanchiment, déterminé à partir du modèle de canal de transmission et d'un bruit de modèle sur le modèle de canal, le bruit de modèle étant un bruit blanc gaussien B de puissance $\sigma^2$.

Le canal de transmission est par exemple modélisé sous la forme d'un filtre numérique de transfert global G, défini par des coefficients $g_k$, où $g_k$ est le k-ième coefficient du filtre G.

Ainsi, le bruit de modèle sur le modèle de canal de transmission équivaut à un bruit $b_k$ ajouté sur chacun des coefficients $g_k$.

On modélise alors un filtre robuste F de la fonction de transfert d'un signal interférent, à partir des coefficients $f_k$ : $f_k = g_k + b_k$.

Le procédé de conception d'un filtre de réception selon l'invention est également remarquable en ce que la complexité du filtre de réception numérique est paramétrable au moyen du bruit de modèle.

En effet, la puissance du bruit de modèle $\sigma^2$ permet de régler la longueur du filtre de blanchiment, et par conséquent la longueur du filtre de réception.

Avantageusement, le filtre de blanchiment est un filtre à phase minimale.

De manière préférentielle, l'étape de modélisation tient compte :

- d'au moins un filtre d'émission dudit signal utile et/ou dudit au moins un signal interférent ;
- d'au moins un canal de propagation dudit signal interférent dont la fonction de transfert est modélisée par la fonction identité ;
- d'au moins un filtre représentatif d'au moins un traitement radio appliqué audit signal utile en réception.

Ainsi, le modèle de canal, par exemple le filtre numérique de transfert global G, inclu le filtre d'émission du signal interférent, le canal de propagation du signal interférent, et un filtre radio de réception modélisant les traitements radio.

Le filtre radio permet de modéliser les effets linéaires de la radio, et notamment les traitements effectués en réception.

Selon l'invention, on modélise la fonction de transfert du canal de propagation par la fonction identité. On définit ainsi la fonction de transfert du canal de propagation par :

$$c_k = 1 \text{ pour } k = 0$$

$$c_k = 0 \text{ pour } k \neq 0.$$

L'invention concerne également un dispositif de réception d'un signal utile véhiculé dans un canal de propagation principal, et émis dans une bande de fréquence utile.

Selon l'invention, un tel dispositif présente une architecture de filtrage en série permettant d'éliminer au moins en partie la contribution d'au moins une perturbation affectant le signal utile, et comprend :

- au moins un premier filtre $Rx_1$ adapté aux perturbations appartenant au groupe comprenant :

  - au moins un signal interférent émis dans ladite bande de fréquence utile, dit signal interférent co-canal ;
  - au moins un bruit thermique blanc ;

- au moins un deuxième filtre $Rx_2$ adapté à au moins un signal interférent émis dans une bande de fréquence distincte de ladite bande de fréquence utile, et notamment dans une bande de fréquence adjacente à ladite bande utile, dit signal interférent adjacent,

au moins un desdits premier ou deuxième filtres étant conçu selon le procédé de conception selon l'une quelconque des revendications 1 à 4.

On rappelle que, dans toute la description, on entend également par « signal interférent adjacent » les signaux interférents bi-adjacents, et que le canal de propagation principal correspond au canal de propagation du signal utile.

Un signal interférent co-canal est donc émis dans la même bande de fréquence que le signal utile.

Ainsi, un tel dispositif de réception comprend au moins deux filtres de réception en série, chacun des filtres étant adapté à éliminer au moins en partie la contribution d'un type de perturbation (par exemple un bruit blanc, un signal interférent co-canal, un signal interférent adjacent,...).

Le deuxième filtre $Rx_2$ peut notamment être optimisé en fonction du premier filtre $Rx_1$, c'est-à-dire que les coefficients du deuxième filtre $Rx_2$ sont déterminés en prenant en compte le premier filtre $Rx_1$.

Selon un mode de réalisation préférentiel de l'invention, le premier filtre $Rx_1$ est implémenté en « hardware », c'est-à-dire au moyen de composants électroniques, tandis que le deuxième filtre $Rx_2$ est implémenté en « software », c'est-à-dire sous forme logicielle.

Avantageusement, le dispositif de réception comprend également des moyens de détection d'au moins un signal interférent adjacent conditionnant l'activation du deuxième filtre $Rx_2$.

Ainsi, le deuxième filtre $Rx_2$ n'est activé que lorsqu'au moins un signal interférent adjacent est détecté par les moyens de détection.

Ces moyens de détection sont par exemple placés entre le premier filtre $Rx_1$ et le deuxième filtre $Rx_2$. S'ils ne détectent pas de signaux interférents adjacents, les ressources utilisées pour la mise en oeuvre du deuxième filtre $Rx_2$ sont disponibles et peuvent être utilisées pour mettre en oeuvre une méthode de détection multi-utilisateurs.

De manière préférentielle, le dispositif de réception est linéaire de type MMSE (« Minimum Mean Square Error » pour « minimisation de l'erreur quadratique moyenne »).

Selon un mode de réalisation avantageux de l'invention, les coefficients d'au moins un des premier et deuxième filtres sont fonction des coefficients d'un filtre de blanchiment d'au moins un signal interférent co-canal et/ou adjacent, ledit filtre de blanchiment tenant compte d'un bruit sur un modèle d'un canal de transmission dudit signal interférent, dit bruit de modèle.

Ainsi, au moins un des filtres utilisé dans le dispositif de réception peut être conçu en utilisant le procédé de conception d'un filtre de réception tel que décrit précédemment.

Le dispositif de réception ainsi obtenu est simple à mettre en oeuvre et présente des performances accrues par rapport aux systèmes de l'art antérieur, notamment en présence de signaux interférents.

Selon ce mode de réalisation avantageux de l'invention, pour le premier filtre $Rx_1$, permettant de filtrer au moins un signal interférent co-canal et/ou un bruit blanc, le modèle de canal de transmission tient compte :

- d'un filtre d'émission Tx dudit signal utile et/ou dudit au moins un signal interférent co-canal ;
- d'au moins un canal de propagation dudit signal interférent co-canal dont la fonction de transfert est modélisée par la fonction identité ;
- d'au moins un filtre représentatif d'au moins un traitement radio appliqué audit signal utile en réception.

Les signaux interférents co-canal étant émis dans la même bande de fréquence que le signal utile, dite bande de fréquence utile, on considère que le filtre d'émission $Tx_2$, est semblable pour le signal utile et pour les signaux interférents co-canal.

Pour le deuxième filtre $Rx_2$, permettant de filtrer au moins un signal interférent adjacent, le modèle de canal de transmission tient compte :

- d'un filtre d'émission Tx dudit signal utile ;
- d'au moins un filtre d'émission $J_2$ desdits signaux interférents adjacents ;
- d'au moins un canal de propagation desdits signaux interférents adjacents dont la fonction de transfert est modélisée par la fonction identité ;
- d'au moins un filtre représentatif d'au moins un traitement radio appliqué audit signal utile en réception ;
- dudit premier filtre $Rx_1$.

On considère dans ce cas que le filtre d'émission $J_2$ des signaux interférents adjacents est modélisé par le filtre d'émission Tx du signal utile modulé par une sinusoïde à la fréquence de 200kHz pour les signaux adjacents, 400kHz pour les signaux bi-adjacents, etc, le système de radiocommunication considéré étant de type GSM/GPRS/EDGE.

Il est bien entendu que ces bandes de fréquence peuvent être différentes dans d'autres systèmes de radiocommunications.

On remarque également que le deuxième filtre $Rx_2$ est conçu en fonction des coefficients du premier filtre $Rx_1$.

Ainsi, on conçoit un deuxième filtre $Rx_2$ optimisé pour éliminer la contribution des signaux interférents adjacents sur un signal utile déjà filtré par un premier filtre $Rx_1$ permettant de supprimer au moins en partie les signaux interférents co-canal et le bruit blanc thermique, et limitant l'interférence inter-symboles.

## 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1, déjà commentée en relation avec l'art antérieur, présente une technique de filtrage basée sur un filtre de réception de type MMSE ;
- les figures 2A et 2B illustrent le principe général de conception d'un filtre de réception en présence de signaux interférents selon l'invention ;
- la figure 3 présente la configuration des canaux dans un système de radiocommunication de type GSM/GPRS/EDGE ;
- la figure 4 présente la mise en série de deux filtres de réception conçus selon le principe général des figures 2A et 2B ;
- les figures 5A et 5B illustrent la technique de conception d'un filtre de réception des figures 2A et 2B en présence de signaux interférents co-canal et de bruit blanc thermique ;
- les figures 6A et 6B illustrent la technique de conception d'un filtre de réception des figures 2A et 2B en présence de signaux interférents émis dans une bande de fréquence adjacente à la bande de fréquence d'émission du signal utile ;
- les figures 7A et 7B illustrent deux techniques de détection des signaux interférents provenant des canaux adjacents au canal principal, pouvant être mises en oeuvre dans le dispositif de réception selon l'invention ;

- la figure 8 illustre la réponse impulsionnelle d'un filtre radio pris en compte dans le calcul des filtres de réception de l'invention ;
- les figures 9A, 9B et 9C décrivent un premier filtre de réception (amplitude, phase et réponse impulsionnelle) mis en oeuvre dans un dispositif de réception en présence de signaux interférents co-canal et de bruit blanc thermique ;
- les figures 10A, 10B et 10C présentent un deuxième filtre de réception (amplitude, phase et réponse impulsionnelle) mis en oeuvre dans un dispositif de réception en série avec le premier filtre de réception des figures 9A, 9B et 9C, en présence de signaux interférents provenant des canaux adjacents au canal principal.

## 6. Description d'un mode de réalisation de l'invention

Le principe général de l'invention repose sur la mise en oeuvre d'une étape de blanchiment lors de la conception d'un filtre de réception, permettant de blanchir les interférences inter-symboles provenant des différents filtres (notamment d'un filtre d'émission ne respectant généralement pas le critère de Nyquist), et les interférences multi-utilisateurs, au moyen d'un filtre de blanchiment tenant compte d'un bruit de modèle sur une modélisation du canal de transmission.
L'invention propose également de mettre en série deux filtres de réception dans un récepteur, chacun des filtres de réception pouvant par exemple être conçu en utilisant un filtre de blanchiment adapté à blanchir des signaux interférents distincts.

## Principe général de la conception d'un filtre de réception en présence de signaux interférents :

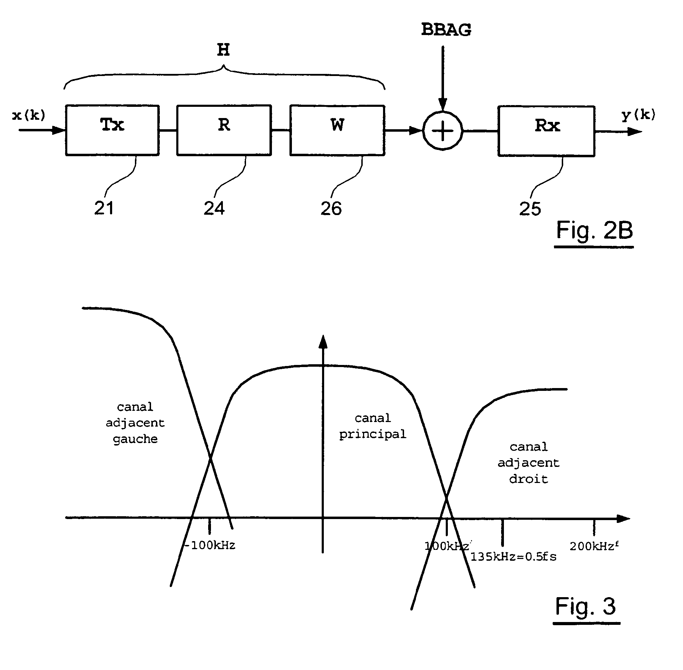

On présente, en relation avec les figures 2A et 2B, le principe général de la conception d'un filtre de réception en présence de signaux interférents.
On suppose, dans cet exemple de réalisation et dans toute la suite de ce document, que la fonction de transfert du canal de propagation des signaux interférents, c'est-à-dire des multi-trajets, est égale à I.
De sorte à déterminer les coefficients du filtre de réception selon l'invention, on considère un canal de transmission composé d'au moins un filtre d'émission du signal utile et/ou des signaux interférents, d'au moins un canal de propagation du signal utile et/ou des signaux interférents, et d'au moins un filtre de réception.
On considère ainsi un signal utile, filtré par un filtre d'émission Tx 21 avant émission.
Le signal utile en sortie du filtre d'émission Tx 21, émis dans une bande de fréquence utile, présente alors une certaine distorsion, à cause du phénomène de repliement des spectres, et présente donc de l'interférence inter-symboles.
On considère ensuite que le signal émis est véhiculé dans un canal de propagation principal avant d'être reçu dans un dispositif de réception 22.
En cours de propagation, des signaux interférents peuvent venir s'ajouter au signal utile. Ces différents signaux interférents sont modélisés au moyen d'un filtre J 23 de mise en forme des interférents, et véhiculés par un canal de propagation des signaux interférents de fonction de transfert égale à l'identité.
Le signal considéré comme reçu au niveau du dispositif de réception 22 est donc composé du signal émis et d'un bruit non blanc.
Le signal reçu est alors filtré par un filtre radio R 24 permettant de modéliser les effets linéaires de la radio, et notamment les traitements effectués en réception.
Ainsi, le canal de transmission est par exemple modélisé sous la forme d'un filtre numérique de transfert global G, défini par des coefficients $g_k$, où $g_k$ est le k-ième coefficient du filtre G, tel que :

$$G(z) = R(z) \cdot J(z),$$

avec $J(z)$ la transformée en $z$ du filtre de mise en forme J 23 ;
$R(z)$ la transformée en $z$ du filtre radio R 24.

Selon l'invention, on modélise un filtre robuste F (défini par des coefficients $f_k$) à partir du filtre numérique de transfert global G, en considérant un bruit de modèle blanc gaussien B de puissance $\sigma^2$ sur les coefficients du filtre de transfert global G :

$$f_k = g_k + b_k.$$

L'invention propose ensuite de calculer les coefficients du filtre de réception Rx 25 à partir de la modélisation d'un filtre de blanchiment.

Ainsi, comme illustré en figure 2B, on modélise un filtre de blanchiment W 26, à partir du filtre robuste F. Le signal interférent, considéré comme un bruit non blanc en sortie du filtre radio R 24, est alors blanchit par le filtre de blanchiment W 26.

Ce filtre de blanchiment W 26 robuste prend donc en compte un modèle du canal de transmission et un bruit de modèle sur ledit modèle, la modélisation du canal de transmission tenant compte du filtre d'émission Tx 21 du signal utile, du filtre J 23 de mise en forme des interférents, du canal de propagation des signaux interférents et du filtre radio R 24.

Le bruit de modèle introduit sur le modèle du canal de transmission conduit à une modélisation imparfaite du filtre de blanchiment W 26, c'est-à-dire que les fréquences nulles du spectre du filtre numérique de transfert global G ne sont pas exactement compensées par le filtre de blanchiment W 26 et celui-ci reste de longueur finie.

La puissance $\sigma^2$ du bruit de modèle permet notamment de régler la longueur du filtre de blanchiment W 26, et donc par la suite la longueur du filtre de réception Rx 25.

On accroît également par la même occasion la robustesse du filtre de réception Rx 25 vis-à-vis du canal de propagation des signaux interférents, face à un signal interférent modélisé approximativement.

En sortie du filtre de blanchiment W 26 modélisé, le signal interférent non blanc issu des filtres d'émission Tx 21, de mise en forme J 23 et de modélisation radio R 24 est donc de nouveau blanc, ce qui permet ce concevoir un filtre de réception Rx 25 à complexité réduite.

Ainsi, selon l'invention, lorsque le bruit additif est non blanc, on conçoit un filtre de réception Rx 25 à partir de la modélisation d'un filtre de blanchiment W 26 robuste vis-à-vis de la modélisation du canal de transmission des interférents.

Le signal interférent entrant sur le filtre de réception Rx 25 du dispositif de réception 22 est alors considéré comme un bruit blanc, et les coefficients du filtre de réception Rx 25 sont déterminés de sorte à minimiser l'erreur quadratique moyenne, comme présenté en relation avec l'art antérieur illustré en figure 1.

Ainsi, le filtre de réception Rx 25 peut être considéré comme un égaliseur linéaire de moindre complexité, basé sur un critère MMSE.

On peut ainsi construire un filtre de réception Rx 25 optimal de longueur finie, prenant en compte le filtre de blanchiment des interférents, et robuste vis-à-vis des signaux interférents.

Le filtre de réception réalise alors un compromis entre la minimisation de l'interférence inter-symboles, dues aux différents filtres, notamment le filtre d'émission (ne respectant pas le critère de Nyquist), et la minimisation de l'interférence inter-utilisateurs, due aux autres utilisateurs.

L'approche proposée pour la conception du filtre de réception Rx 25 revient donc à construire un égaliseur linéaire MMSE adapté à la fois au filtre d'émission Tx 21 convolué par le modèle de radio représenté par le filtre radio R, et au filtre de blanchiment W 26.

Plus précisément, on peut définir le filtre de blanchiment W 26 à partir des équations suivantes :

$$W(z) \cdot W^*(1/z^*) = \frac{1}{F(z) \cdot F^*(1/z^*)} = \frac{1}{G(z) \cdot G^*(1/z^*) + \sigma^2}$$

avec $G(z) = J(z) \cdot R(z)$

où $G(z) \cdot G^*(1/z^*)$ est la transformée en z bilatère de la corrélation du filtre de transfert global G ;
$F(z) \cdot F^*(1/z^*)$ est la transformée en z bilatère de la corrélation du filtre robuste F ;
$J(z)$ est la transformée en $z$ du filtre de mise en forme J ;
R(z) est la transformée en $z$ du filtre radio R ;
$\sigma^2$ est la puissance du bruit de modèle, ou encore sa variance.

Ce filtre de blanchiment robuste W 26 est défini par sa transformée en z monolatère $W(z)$, et calculé de manière à blanchir la corrélation du filtre robuste F.

Si $F(z)$ est un filtre de longueur $L$, il y a $2^L$ façons de construire le filtre de blanchiment W 26.

On utilise ici un filtre à phase minimale afin de faciliter la troncation du filtre de réception Rx 25.

Le bruit de modèle $\sigma^2$ détermine la puissance du bruit pris en compte au cours de l'étape de blanchiment, et permet de régler la longueur du filtre W 26. Le réglage de ce bruit de modèle permet ainsi d'éviter que $F(z)$ ait une racine sur le cercle unité, et donc que le filtre W 26 ne deviennent infiniment long.

Ainsi les « trous » en fréquences ne sont pas exactement compensés par le filtre de blanchiment W 26 et celui-ci reste de longueur finie. On accroît également la robustesse du filtre de réception Rx 25 vis-à-vis d'un interférent mal modélisé.

Le filtre de réception Rx 25 est alors construit comme un égaliseur linéaire de type MMSE, en mettant en oeuvre une technique classique de minimisation de l'erreur quadratique moyenne telle que présentée en relation avec la figure 1, et en considérant que le filtre global H 11 représentatif des différents traitements effectués correspond à la convolution des filtres d'émission Tx 21, de radio R 24 et de blanchiment W 26 :

$$H(z) = Tx(z) \cdot R(z) \cdot W(z),$$

$$J(H) = \mathrm{E}\!\left[\left|x(k) - y(k)\right|^2\right],$$

où E[·] correspond à l'espérance mathématique.

Ainsi, le filtre de réception Rx 25 de type MMSE tient compte du filtre global H 11, et est conçu de sorte à minimiser l'erreur quadratique moyenne J.

L'introduction de ce facteur $\sigma^2$ dans l'étape de blanchiment peut également être vu comme un blanchiment au sens MS considérant un bruit de fond non nul.

## Application aux interférences co-canal et adjacents dans le cadre d'un filtrage série :

Il est également possible de construire un ou plusieurs filtres de réception adapté(s) à des signaux interférents distincts de sorte à concevoir un dispositif de réception à complexité réduite, présentant de bonnes performances en présence de signaux interférents de nature différente.

Ce dispositif de réception peut notamment présenter une architecture de filtrage en série, comprenant au moins deux filtres en série, adaptés chacun à éliminer la contribution d'au moins une perturbation affectant le signal utile.

En effet, dans un système de radiocommunication cellulaire, on rencontre différents types de perturbations :

- les signaux interférents adjacents, émis dans une bande de fréquence distincte de la bande de fréquence utile, soit encore véhiculés par au moins un canal de propagation adjacent audit canal de propagation principal, comme illustré en figure 3 ;
- les signaux interférents co-canal, émis dans la même bande de fréquence que le signal utile, et provenant notamment des différents filtres ;
- le bruit blanc thermique.

Selon l'invention, on propose d'utiliser un système de filtrage en série basé sur la factorisation des cas de propagation. On regroupe ainsi les perturbations « bruit » ou « interférences » en deux classes :

1. les signaux interférents co-canal et le bruit thermique blanc ;
2. les signaux interférents adjacents.

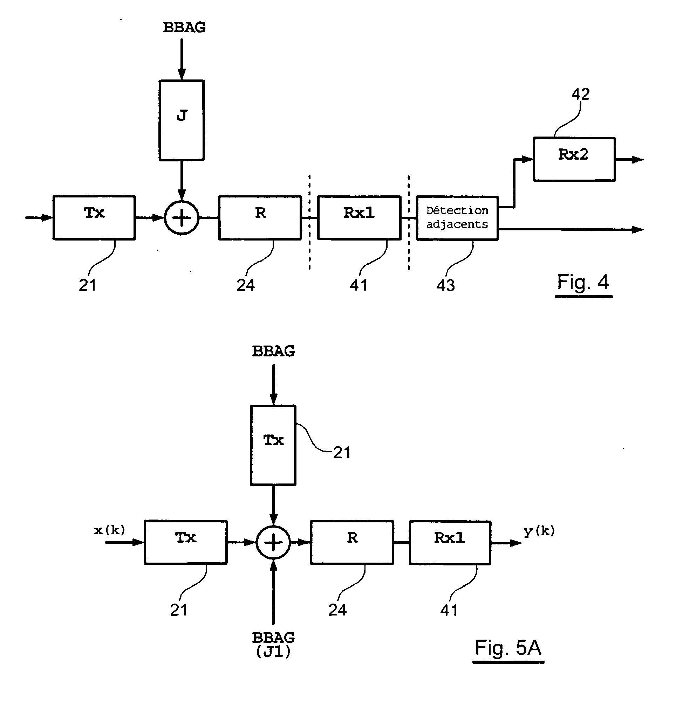

Ainsi, comme illustré en figure 4, le dispositif de réception comprend un premier filtre $Rx_1$ 41 conçu pour optimiser les performances du récepteur en présence de signaux interférents co-canal et/ou de bruit thermique blanc, et un second filtre $Rx_2$ 42 conçu pour optimiser les performances du récepteur en présence signaux interférents adjacents, mis en série.

Selon un mode de réalisation préférentiel de ce dispositif basé sur une technique de filtrage en série, on prévoit d'insérer des moyens de détection 43 des signaux interférents adjacents avant le second filtre $Rx_2$ 42. Ainsi, le dispositif de réception effectue un filtrage au moyen du second filtre $Rx_2$ 42 conditionnellement à la détection de signaux interférents adjacents.

Le premier filtre de réception $Rx_1$ 41 est préférentiellement implémenté en « hardware », c'est-à-dire à l'aide de composants électroniques, tandis que le second filtre $Rx_2$ 42 est implémenté en « software », c'est-à-dire sous forme logicielle.

Ainsi, lorsque les moyens de détection des adjacents 43 ne détectent pas de signaux interférents adjacents, les ressources utilisées normalement par le second filtre de réception $Rx_2$ 42 restent disponibles.

On peut donc envisager d'utiliser les ressources de calcul disponibles, en absence de signaux interférents adjacents, par le premier filtre de réception $Rx_1$ 41 pour implémenter une méthode de détection conjointe des signaux interférents co-canal, c'est-à-dire des mutli-utilisateurs.

Il est également possible, lorsque les signaux interférents varient, d'ajuster les coefficients du second filtre de réception $Rx_2$ 42 pour améliorer les performances du dispositif de réception.

Ces deux filtres de réception $Rx_1$ 41 et $Rx_2$ 42 sont, selon un mode de réalisation préférentiel, conçus selon le procédé de conception d'un filtre de réception de l'invention.

Selon d'autres variantes de réalisation, ces filtres de réception $Rx_1$ 41 et $Rx_2$ 42 sont conçus selon une autre technique.

Selon le mode de réalisation préférentiel dans lequel les filtres de réception $Rx_1$ 41 et $Rx_2$ 42 sont conçus selon le procédé de conception de l'invention, les différents signaux interférents co-canal et adjacents sont modélisés au moyen d'un filtre de mise en forme des interférents, de même gabarit que le filtre d'émission Tx 21.

Ainsi, dans le cas de signaux interférents co-canal, comme illustré en figure 5A, le filtre de mise en forme $J_1$ des interférents est considéré comme équivalent au filtre d'émission Tx 21 des signaux utile et/ou interférents, auquel on ajoute un bruit blanc de puissance $\sigma_1^2$. La puissance de ce bruit peut varier, et peut être sensiblement égale à 0.

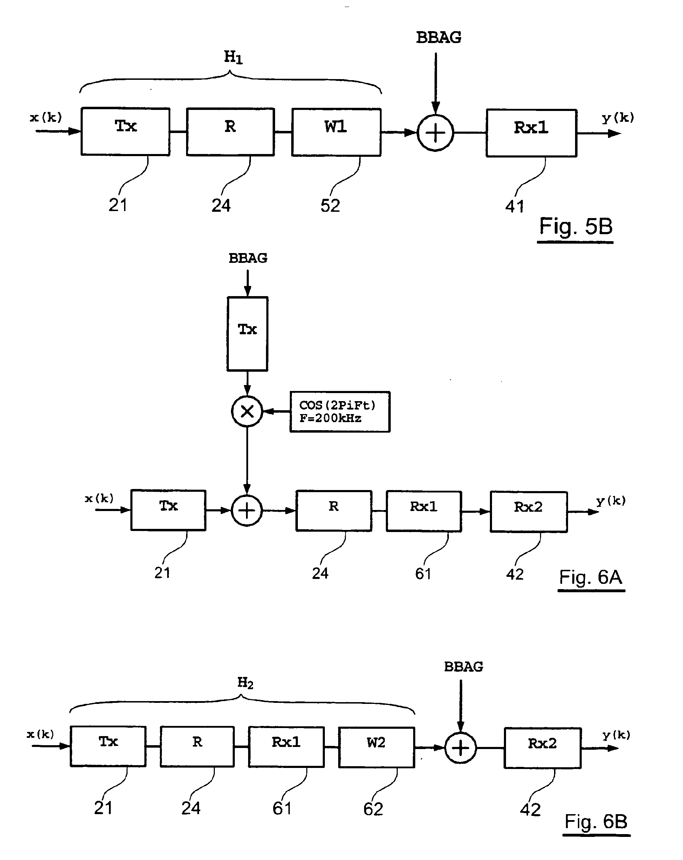

Dans le cas de signaux interférents adjacents, comme illustré en figure 6A, le filtre de mise en forme $J_2$ des interférents est considéré comme équivalent au filtre d'émission Tx 21 décalé en fréquence de 200kHz, c'est-à-dire modulé par une sinusoïde à la fréquence de 200kHz.

**Optimisation des coefficients du premier filtre de réception :**

Selon ce mode de réalisation préférentiel de l'invention, le dispositif de réception optimise tout d'abord le calcul des coefficients du premier filtre de réception $Rx_1$ 41, comme illustré en figure 5A.

Ce filtre de réception $Rx_1$ 41 est conçu pour optimiser les performances du récepteur en présence d'interférences de type co-canal et/ou d'un bruit additif blanc. Il minimise ainsi l'interférence inter-symboles résiduelle vue par le récepteur, et due aux filtres d'émission et de réception.

Comme illustré en figure 5B et expliqué précédemment en relation avec les figures 2A et 2B, on modélise un premier filtre de blanchiment $W_1$ 52 permettant de blanchir un bruit non blanc (entaché par les signaux interférents co-canal) en sortie du filtre radio R 24, de sorte à calculer les coefficients du premier filtre de réception $Rx_1$ 41.

Pour ce faire, on modélise tout d'abord le canal de transmission, en tenant compte :

- du filtre de mise en forme $J_1$ des interférents ;
- d'au moins un canal de propagation du signal interférent co-canal dont la fonction de transfert est modélisée par la fonction identité ;
- du filtre R radio représentatif d'au moins un traitement radio appliqué au signal utile en réception.

Le filtre de mise en forme $J_1$ des interférents tient notamment compte du filtre d'émission Tx 21 du signal utile, puisque les signaux interférents (signaux interférents co-canal et/ou bruit blanc) sont émis dans la même bande de fréquence que le signal utile, et du bruit blanc de puissance $\sigma_1^2$ :

$$J_1(z) = Tx(z) + \sigma_1$$

On remarque que plus $\sigma_1$ est grand par rapport aux coefficients du filtre d'émission Tx 21 des signaux utile et/ou interférents, plus le filtre de réception $Rx_1$ 41 est performant pour un canal de propagation véhiculant un bruit blanc additif gaussien.

Inversement, plus $\sigma_1$ est faible par rapport aux coefficients du filtre d'émission Tx 21 des signaux utile et/ou interférents, plus le filtre de réception $Rx_1$ 41 est performant dans le cas d'un bruit blanc additif gaussien.

Le modèle de canal peut notamment s'exprimer sous la forme d'un filtre $G_1$ de transfert global.

On considère ensuite un bruit de modèle $\sigma^2$ sur les coefficients du filtre $G_1$ de transfert global, formant un filtre robuste $F_1$.

Ce bruit de modèle $\sigma^2$ est notamment pris en compte lors de l'étape de blanchiment, dans le premier filtre de blanchiment $W_1$ 52, et permet de rendre le blanchiment de l'interférent co-canal robuste face au canal de propagation des signaux interférents. Ce bruit de modèle $\sigma^2$ permet également de régler la longueur du filtre $W_1$ 52, défini par les équations suivantes :

$$W_1(z) \cdot W_1^*(1/z^*) = \frac{1}{F_1(z) \cdot F_1^*(1/z^*)} = \frac{1}{G_1(z) \cdot G_1^*(1/z^*) + \sigma^2}$$

avec $G_1(z) = R(z) \cdot J_1(z)$,
et $J_1(z) = Tx(z) + \sigma_1$

où $Tx(z)$ est la transformée en z du filtre Tx d'émission du signal utile ;
$R(z)$ est la transformée en z du filtre radio R ;
$\sigma^2$ est la puissance du bruit de modèle, ou encore sa variance.

Le premier filtre $Rx_1$ 41 est alors construit comme un égaliseur linéaire de type MMSE, en mettant en oeuvre la technique classique de minimisation de l'erreur quadratique moyenne telle que présentée en relation avec la figure 1, et en considérant que le filtre global $H_1$ représentatif des différents traitements effectués correspond à la convolution des filtres d'émission Tx 21, de radio R 24 et de blanchiment $W_1$ 52 :

$$H_1(z) = Tx(z) \cdot R(z) \cdot W_1(z),$$

$$J(H_1) = \mathrm{E}\left[\left|x(k) - y(k)\right|^2\right],$$

où $E[\cdot]$ correspond à l'espérance mathématique.
Ainsi, le premier filtre $Rx_1$ 41 de type MMSE tient compte du filtre global $H_1$, et est conçu de sorte à minimiser l'erreur quadratique moyenne J.

**Optimisation des coefficients du second filtre de réception** :

Selon le mode de réalisation préférentiel de l'invention, le dispositif de réception ayant optimisé les coefficients du premier filtre de réception $Rx_1$ 41 et les moyens de détection adjacents 43 ayant détectés des signaux interférents véhiculés dans un canal de propagation adjacent au canal de propagation du signal utile, alors le dispositif de réception optimise le calcul des coefficients du second filtre de réception $Rx_2$ 42, comme illustré en figure 6A.
Ce filtre de réception $Rx_2$ 42 est conçu pour optimiser les performances du récepteur en présence de signaux interférents de type adjacent. Il minimise l'interférence inter-symboles résiduelle vue par le récepteur et due aux filtres d'émission, de modélisation de la radio R 24 et au premier filtre de réception ajusté $Rx_1$ 61 (les coefficients de ce filtre ajusté tenant compte du filtre de blanchiment $W_1$ 52) tout en minimisant l'interférence due aux canaux adjacents.
Comme illustré en figure 6B et expliqué en relation avec les figures 2A et 2B, on modélise ensuite un second filtre de blanchiment $W_2$ 62 permettant de blanchir un bruit non blanc (entaché par les signaux interférents adjacents et les différents filtres, notamment le filtre de réception ajusté $Rx_1$ 61) en sortie du filtre de réception ajusté $Rx_1$ 61, de sorte à calculer les coefficients du second filtre de réception $Rx_2$ 42.
Pour ce faire, on modélise tout d'abord le canal de transmission, en tenant compte :

- du filtre d'émission Tx 21 du signal utile ;
- du filtre de mise en forme $J_2$ des signaux interférents adjacents ;
- d'au moins un canal de propagation du signal interférent co-canal dont la fonction de transfert est modélisée par la fonction identité ;
- du filtre R radio représentatif d'au moins un traitement radio appliqué au signal utile en réception ;
- du premier filtre $Rx_1$ 61.

Le filtre de mise en forme $J_2$ des interférents tient notamment compte du filtre d'émission Tx 21 du signal utile décalé en fréquence (modulé par exemple par une sinusoïde à la fréquence de 200kHz), puisque les signaux interférents sont véhiculés émis dans une bande de fréquence adjacente à la bande de fréquence du signal utile, soit encore dans un canal de propagation adjacent au canal de propagation du signal utile.
Le modèle de canal peut notamment s'exprimer sous la forme d'un filtre $G_2$ de transfert global.
On considère ensuite un bruit de modèle $\sigma^2$ sur les coefficients du filtre $G_2$ de transfert global, formant un filtre robuste $F_2$.
Ce bruit de modèle $\sigma^2$ est notamment pris en compte lors de l'étape de blanchiment, dans le deuxième filtre de blanchiment $W_2$ 62, et permet de rendre le blanchiment de l'interférent co-canal robuste face au canal de propagation. Ce bruit de modèle $\sigma^2$ permet également de régler la longueur du filtre $W_2$ 62, défini par les équations suivantes :

$$W_2(z) \cdot W_2^*(1/z^*) = \frac{1}{F_2(z) \cdot F_2^*(1/z^*)} = \frac{1}{G_2(z) \cdot G_2^*(1/z^*) + \sigma^2}$$

avec $G_2(z) = R(z) \cdot Rx_1(z) \cdot J_2(z)$,

où $Tx(z)$ est la transformée en $z$ du filtre d'émission Tx 21 ;
$R(z)$ est la transformée en $z$ du filtre radio R 24 ;
$J_2(z)$ est la transformée en $z$ du filtre d'émission Tx 21 décalé en fréquence de 200kHz ;
$\sigma^2$ est la puissance du bruit de modèle, ou encore sa variance.

Ainsi, ce second filtre de blanchiment $W_2$ 62 prend en compte le bruit introduit par le filtre de mise en forme $J_2$ des interférents et le bruit introduit par les différents filtres, notamment le filtre radio R 24 et le filtre de réception ajusté $Rx_1$ 61.

Le deuxième filtre $Rx_2$ 42 est alors construit comme un égaliseur linéaire de type MMSE, en mettant en oeuvre la technique classique de minimisation de l'erreur quadratique moyenne telle que présentée en relation avec la figure 1.

On considère cependant dans ce cas que le filtre global $H_2$ représentatif des différents traitements effectués correspond à la convolution des filtres d'émission Tx 21, de radio R 24, du premier filtre $Rx_1$ 61 et du filtre de blanchiment $W_2$ 62 :

$$H_2(z) = Tx(z) \cdot R(z) \cdot Rx_1(z) \cdot W_2(z),$$

$$J(H_2) = E\left[\left|x(k) - y(k)\right|^2\right],$$

où $E[\cdot]$ correspond à l'espérance mathématique.

Ainsi, le deuxième filtre $Rx_2$ 42 de type MMSE tient compte du filtre global $H_2$, et est conçu de sorte à minimiser l'erreur quadratique moyenne J.

Un exemple numérique de calculs des coefficients des filtres de réception $Rx_1$ et $Rx_2$ est présenté en annexe.

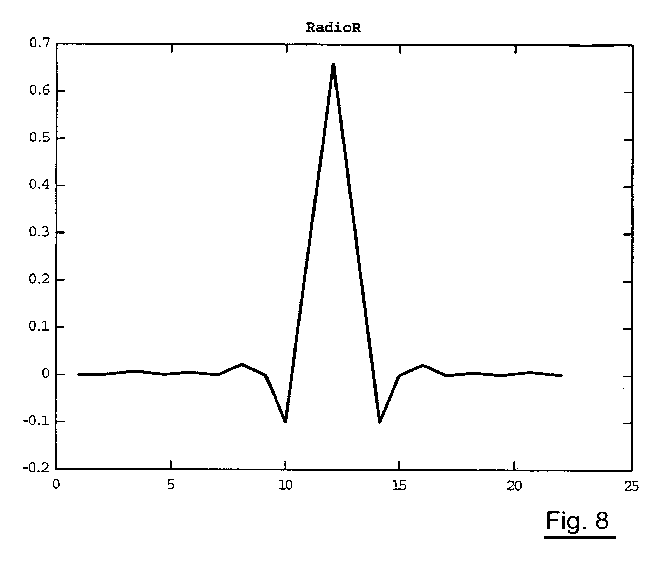

Dans cet exemple, le filtre radio R choisi est un filtre en cosinus surélevé de bande 180kHz, calculé sur 22 coefficients, présentant un facteur de retombée de 0,4 (de l'anglais « roll-off »). La figure 8 illustre la réponse impulsionnelle de ce filtre radio R.

Le filtre d'émission Tx utilisé dans cet exemple est le filtre d'émission 8PSK (de l'anglais « Phase Shift Keying » pour « modulation par déplacement de phase »), tel que défini dans la norme « GSM 05.04 Digital cellular telecommunications system (Phase 2+) Modulation ».

On peut remarquer que dans le cas d'un réseau cellulaire GSM/EDGE, où des signaux interférents de type GMSK (de l'anglais « Gaussian minimum phase shift keying » pour « modulation par déphasage minimal à filtrage gaussien ») et 8PSK sont possibles, on utilise ce même filtre Tx 8PSK pour calculer les filtres de réception $Rx_1$ et $Rx_2$.

En effet, ce filtre 8PSK est défini de telle sorte que les deux signaux 8PSK et GMSK émis ont le même spectre.

Ensuite, après modélisation du canal de transmission, on évalue les coefficients des filtres de blanchiment $W_1$ et $W_2$ et on calcule à partir de ces coefficients les coefficients des filtres de réception $Rx_1$ et $Rx_2$.

Dans l'exemple présenté, on considère notamment, pour le calcul des coefficients des filtres $W_1$ et $Rx_1$, que :

- la puissance relative d'un signal interférent co-canal ($\sigma^2_{co-canal}$) et du bruit blanc additif gaussien ($\sigma^2_1$) est de l'ordre de 20dB :

$$10\log_{10}\left(\frac{\sigma^2_{co-canal}}{\sigma^2_1}\right) = 20 dB \; ;$$

- la puissance relative du bruit de modèle et des signaux interférents co-canal et bruit blanc est de l'ordre de 20dB :

$$10\log_{10}\left(\frac{\sigma_1^2 + \sigma_{co-canal}^2}{\sigma^2}\right) = 20dB \; ;$$

- le rapport signal à bruit pour le calcul de l'égaliseur MMSE linéaire est de l'ordre de 10dB ;

et, pour le calcul des coefficients des filtres $W_2$ et $Rx_2$, que :

- la puissance relative du bruit de modèle et des signaux interférents adjacents ($\sigma_{adjacent}^2$) est de l'ordre de 20dB :

$$10\log_{10}\left(\frac{\sigma_{adjacent}^2}{\sigma^2}\right) = 20dB \; ;$$

- le rapport signal à bruit pour le calcul de l'égaliseur MMSE linéaire est de l'ordre de 10dB.

Les coefficients des filtres de blanchiment $W_1$ et $W_2$ et les coefficients des filtres de réception $Rx_1$ et $Rx_2$, calculés en tenant compte de ses différents paramètres, sont présentés en annexe.

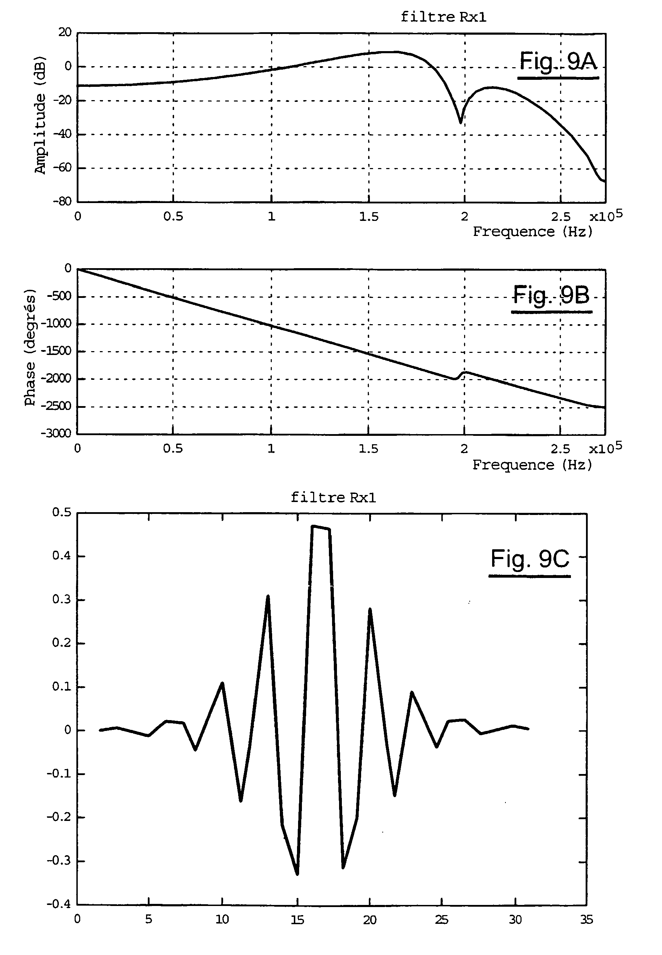

Les filtres de réception $Rx_1$ et $Rx_2$ évalués dans cet exemple sont présentés en relation avec les figures 9A, 9B et 9C (filtre $Rx_1$), et 10A, 10B et 10C (filtre $Rx_2$).

Ainsi, le module de la fonction de transfert du filtre $Rx_1$ en fonction de sa fréquence est illustré en figure 9A, la phase de la fonction de transfert du filtre $Rx_1$ en fonction de sa fréquence en figure 9B, et la réponse impulsionnelle du filtre $Rx_1$ en figure 9C.

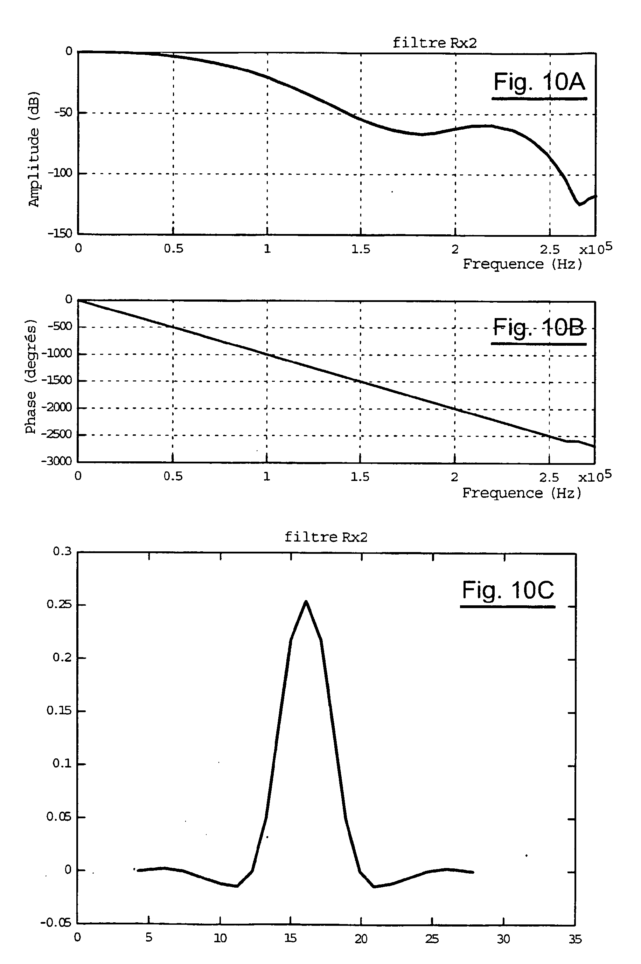

Les figures 10A, 10B et 10C illustrent la fonction de transfert du filtre $Rx_2$ en fonction de sa fréquence (figure 10A), la phase de la fonction de transfert du filtre $Rx_2$ en fonction de sa fréquence (figure 10B), et la réponse impulsionnelle du filtre $Rx_2$ (figure 10C).

**Implémentation des moyens de détection des signaux interférents adjacents :**

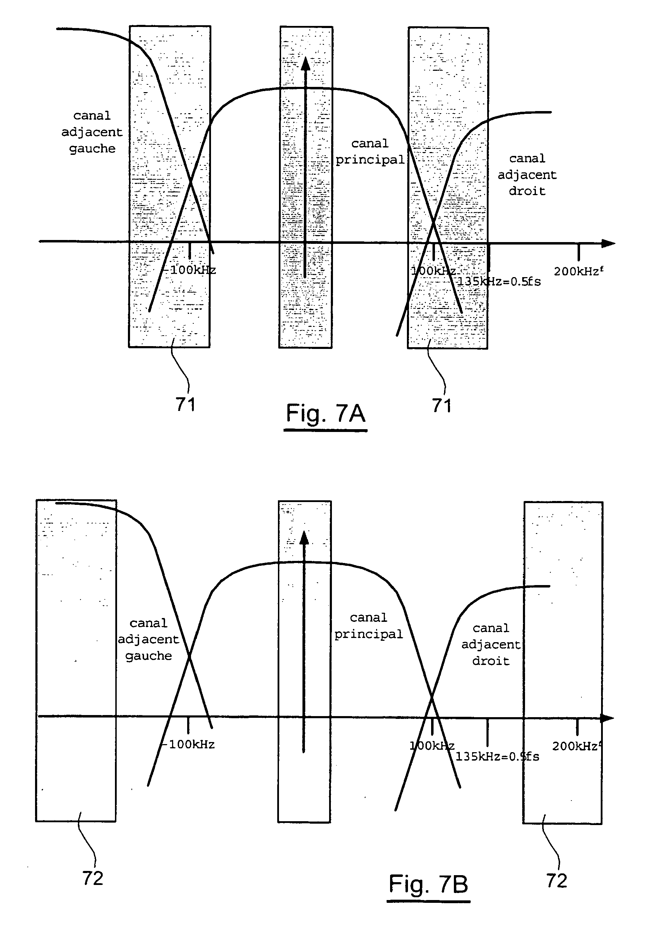

On présente désormais en relation avec les figures 7A et 7B deux techniques de détection des signaux interférents émis dans une bande de fréquence adjacente à la bande de fréquence du signal utile et pouvant être mises en oeuvre dans le dispositif de réception selon l'invention.

Comme décrit précédemment, selon le mode de réalisation préférentiel de l'invention, on prévoit d'insérer des moyens de détection 43 des signaux interférents adjacents avant le deuxième filtre $Rx_2$ 42, le dispositif de réception n'effectuant de filtrage au moyen du deuxième filtre $Rx_2$ 42 qu'en cas de détection de signaux interférents adjacents.

Ces moyens de détection 43 doivent ainsi prendre une décision au niveau des paquets de données reçus (ou « burst » en anglais), pour savoir s'ils sont ou non perturbés par un des deux canaux adjacents (gauche ou droite) comme illustré en figure 3.

Cette décision peut se baser sur le paquet reçu, mais aussi sur une statistique prenant en compte les résultats du paquet courant, couplés à ceux des paquets précédents.

Cette décision ferme peut éventuellement être accompagnée d'un indicateur de fiabilité, d'une probabilité pour ce signal d'être perturbé ou non par un canal adjacent.

On présente ci-après différentes techniques permettant de distinguer les signaux interférents adjacents des signaux interférents co-canal et/ou du bruit blanc thermique.

Ces différentes techniques permettent d'une part de mesurer l'impact de chaque signal interférent sur le paquet courant, et d'autre part d'effectuer des statistiques sur les derniers paquets, pour sortir une décision finale sur le paquet courant.

Plusieurs techniques sont notamment envisageables pour caractériser les différents signaux interférents.

Ainsi, si on cherche uniquement à détecter un canal adjacent, une opération mathématique de transformée de Fourier (FFT) sur les quelques points qui correspondent à une zone de recouvrement 71 des canaux adjacent et principal, comme illustré en figure 7A, est envisageable.

Cette première technique est notamment utilisable si l'on échantillonne le signal reçu à la fréquence symbole (par exemple à la fréquence de 270,8kHz dans un système de radiocommunication de type GSM/GPRS/EDGE), le spectre du signal échantillonné ne contenant alors pas le reste des canaux adjacents.

On peut alors faire des statistiques sur l'énergie présente dans cette bande du signal, par exemple son rapport à la puissance du canal principal ou du signal reçu. Pour obtenir des résultats satisfaisants, on peut lisser cette statistique sur un certain nombre de paquets reçus.

On peut aussi effectuer l'opération de transformée de Fourier (FFT) sur quelques points dans la bande des canaux adjacents (à gauche et à droite), si celle-ci est présente dans le spectre en bande de base.

De la même façon, on fait ensuite des statistiques sur l'énergie de ce signal par rapport au signal du canal principal. On peut également lisser ces statistiques sur plusieurs paquets pour améliorer leur fiabilité.

La figure 7B illustre ainsi un autre exemple de zones 72 où peuvent se situer les points de la FFT à calculer.

On remarque qu'il est également possible de procéder à une transformée de Fourier sur tout le spectre des signaux utile et adjacent. Cependant, cette technique augmente le temps de calculs et la complexité du système.

Une deuxième technique de détection des signaux interférents adjacents consiste à utiliser un filtre passe-bande ou passe-haut pour isoler les canaux adjacents.

Une fois ces canaux isolés, on peut calculer leur puissance, leur rapport à la puissance du canal principal, et de nouveau faire des statistiques sur ces valeurs.

Ces deux premières techniques cherchent à isoler le(s) canal(canaux) adjacent(s) en le(s) discriminant du canal principal dans le domaine fréquentiel.

D'autres techniques peuvent également être utilisées, isolant les signaux interférents dans le domaine temporel, puis les traitant dans le domaine temporel ou dans le domaine fréquentiel.

Ainsi, une troisième technique de détection d'un signal interférent adjacent consiste à soustraire au signal reçu une reconstruction de ce même signal.

Considérons par exemple une séquence d'apprentissage connue du récepteur correspondant à une partie d'un paquet de données (c'est-à-dire que le récepteur connaît les symboles composant la séquence d'apprentissage).

A partir de la séquence d'apprentissage, on réalise une estimation de canal. On peut ensuite reconstruire le paquet reçu en convoluant les symboles théoriques avec le canal estimé.

On soustraie alors la séquence reçue à la séquence reconstruite : on obtient un vecteur de bruit temporel, que l'on peut passer dans le domaine fréquentiel (à l'aide d'une FFT par exemple) pour obtenir son spectre.

Ce vecteur de bruit fréquentiel est ensuite corrélé avec des modèles pré-calculés correspondants aux différents interférents : co-canal, bruit blanc, adjacents gauches et droits.

On obtient alors plusieurs scores, qui sont ensuite pris en compte par un bloc de logique de décision, qui une fois de plus, peut calculer des statistiques sur plusieurs paquets, et émettre une décision finale.

Une quatrième technique consiste à calculer la corrélation du vecteur de bruit temporel obtenu comme décrit précédemment, puis à comparer cette corrélation à des modèles de corrélation pré-calculés qui correspondent à des interférents co-canal, bruit blanc, adjacents.

Les résultats de ces comparaisons sont pris en compte par un organe de décision, éventuellement sur plusieurs paquets (statistiques).

### ANNEXES

Exemple numérique de coefficients pour les filtres de réception $Rx_1$ et $Rx_2$, déterminés à partir des coefficients des filtres de blanchiment $W_1$ et $W_2$, d'un filtre radio R modélisé comme suit, et d'un filtre d'émission Tx de type 8PSK tel que défini dans la norme « GSM 05.04 Digital cellular telecommunications system (Phase 2+) Modulation » :

*Coefficients du filtre radio R utilisé :*

**R = [**

-0.00069476397561  0.00049866279829  0.00003769112140  0.00179376509986

-0.00285785891354  0.00007817157433  -0.00456346046181  0.01954632518802

-0.00128250958812  -0.10384363206460  0.25905109587175  0.66420664206642

0.25905109587175  -0.10384363206460  -0.00128250958812  0.01954632518802

-0.00456346046181  0.00007817157433  -0.00285785891354  0.00179376509986

0.00003769112140  0.00049866279829 ]

*Coefficients du premier filtre de blanchiment $W_1$ modélisé :*

**$W_1$ = [**

1.00000000000000  -1.69923672623924  1.20422941893564  -0.15529008675767

-0.41045389212838  0.25120716271039  0.10549692072460  -0.18350163753085

0.02055990726447  0.09753248621175  -0.05745073127702  -0.03091626283764

0.04949634371071  -0.00575571431264  -0.02678700887691  0.01672974682172

0.00760788713748  -0.01367684082893  0.00225936999941  0.00696773190215

-0.00476443487796  -0.00177653929037  0.00369228207706  -0.00076552572359

-0.00180803688416  0.00134280509131  0.00040890403254  -0.00099571529204

0.00024802068919  0.00046716002803  -0.00037668966993  -0.00009103863618

0.00026770665567  -0.00007788853728  -0.00012007431632  0.00010518584002

0.00001928139743  -0.00007173063283  0.00002389439010  0.00003068453654

-0.00002924081816  -0.00000376524639  0.00001915553670  -0.00000719991206

-0.00000779095111  0.00000809486615  0.00000062554829  -0.00000509745528

0.00000213922649  0.00000196236357  -0.00000223172118  -0.00000006095299

0.00000134918087  -0.00000062991066  -0.00000048444470  0.00000061141509

-0.00000002112176  -0.00000034651382  0.00000019163480  0.00000009420485

-0.00000016222012  0.00000006609688 ]

*Coefficients du premier filtre de réception $Rx_1$ déterminé :*

**Rx$_1$ = [**

-0.00012130947281  -0.00042290824165  0.00257605424211  -0.00108917050508

-0.00996742210872  0.01555037274041  0.01400103804618  -0.05971274419478

0.03014043470086  0.10472670860755  -0.17248397669623  -0.02236877457659

0.31030339312762  -0.21544655632118  -0.33138809534359  0.46952753670838

0.46493919583532  -0.32191690721434  -0.20498399405536  0.28922928740778

-0.02053484645060  -0.15319713486050  0.09062332115789  0.02497809992243

-0.04793670562384  0.01080663561778  0.01111651840583  -0.00661968318690

-0.00060765382772  0.00117508511605  -0.00011138451730 ]


*Coefficients der deuxième filtre de blanchiment W$_2$ modélisé :*

**W$_2$ = [**

1.00000000000000  0.07746136827150  1.52870558246248  -0.12663989283937

0.59100460911810  -0.02177039464291  -0.25447117057856  0.13423518075783

-0.17799535572748  -0.03587809251668  0.11101008625324  -0.08323333144596

0.03015388260085  0.06456340307543  -0.07992567542338  0.03688375728235

0.02917806396597  -0.07572161275519  0.06140602631322  -0.00666791918806

-0.05043120066762  0.07103675734251  -0.04209604339230  -0.01183625323311

0.05381374757059  -0.05706247988723  0.02274919674245  0.02276408206344

-0.04879343177558  0.04023050508713  -0.00630273368986  -0.02798624031725

0.04013298243862  -0.02453778350388  -0.00549782191719  0.02859598148265

-0.03029587878045  0.01181881230602  0.01243030237018  -0.02583059443314

0.02075460322748  -0.00260040678944  -0.01523953721570  0.02109593010211

-0.01249433519468  -0.00325983125320  0.01508637926663  -0.01575076423646


0.00615174446830  0.00621578325591  -0.01322463047943  0.01095547189688

-0.00211089715217  -0.00675265797766  0.01087722095869  -0.00755246669693

0.00083230441047  0.00478441597740  -0.00934017592739  0.00502209882898

-0.00547012373567 ]

*Coefficients du deuxième filtre de réception $Rx_1$ détermainé :*

$$Rx_2 = [$$

-0.00000426432980  -0.00002687976707  -0.00002682337906  0.00010604881319

0.00054407749055  0.00126084040857  0.00130239319269  -0.00090752283816

-0.00709465605356  -0.01569043823635  -0.01793035849060  0.00126528463586

0.05560738033813  0.13918970304906  0.21942698798309  0.25276417496279

0.21777830984067  0.13687299502456  0.05370799483963  0.00028109355284

-0.01815007990869  -0.01557104426546  -0.00691557806640  -0.00081780292270

0.00128887097528  0.00121844377595  0.00049998932091  0.00008291350184

-0.00003108725373  -0.00002712220642  -0.00000384398762 ]

## Revendications

1. Procédé de conception d'un filtre de réception numérique d'un signal utile, **caractérisé en ce qu'**il comprend des étapes de :

   - modélisation d'au moins un canal de transmission d'au moins un signal interférent avec ledit signal utile, de façon à obtenir un modèle de canal interférent ;
   - blanchiment dudit au moins un signal interférent, au moyen d'un filtre de blanchiment (26) tenant compte dudit modèle de canal interférent et d'un bruit sur ledit modèle, dit bruit de modèle ;
   - calcul des coefficients dudit filtre de réception numérique (25) à partir d'au moins un coefficient dudit filtre de blanchiment (26).

2. Procédé de conception selon la revendication 1, **caractérisé en ce que** la complexité dudit filtre de réception numérique est paramétrable au moyen dudit bruit de modèle.

3. Procédé de conception selon l'une quelconque des revendications 1 et 2, **caractérisé en ce que** ledit filtre de blanchiment (26) est à phase minimale.

4. Procédé de conception selon l'une quelconque des revendications 1 à 3, **caractérisé en ce que** ladite étape de modélisation tient compte :

   - d'au moins un filtre d'émission (21) dudit signal utile et/ou dudit au moins un signal interférent ;
   - d'au moins un canal de propagation dudit signal interférent dont la fonction de transfert est modélisée par la fonction identité ;
   - d'au moins un filtre (24) représentatif d'au moins un traitement radio appliqué audit signal utile en réception, dit filtre radio R.

5. Dispositif de réception d'un signal utile émis dans une bande de fréquence utile,
   **caractérisé en ce qu'**il présente une architecture de filtrage en série permettant d'éliminer au moins en partie la contribution d'au moins une perturbation affectant ledit signal utile, comprenant :

   - au moins un premier filtre $Rx_1$ (41) adapté aux perturbations appartenant au groupe comprenant :

- au moins un signal interférent émis dans ladite bande de fréquence utile, dit signal interférent co-canal ;
- au moins un bruit thermique blanc ;

- au moins un deuxième filtre $Rx_2$ (42) adapté à au moins un signal interférent émis dans au moins une bande de fréquence distincte de ladite bande de fréquence utile, dit signal interférent adjacent,

au moins un desdits premier ou deuxième filtres étant conçu selon le procédé de conception selon l'une quelconque des revendications 1 à 4.

6. Dispositif de réception selon la revendication 5, **caractérisé en ce qu'**il comprend des moyens de détection (43) d'au moins un signal interférent adjacent conditionnant l'activation dudit deuxième filtre $Rx_2$ (42).

7. Dispositif de réception selon l'une quelconque des revendications 5 et 6, **caractérisé en ce qu'**il est linéaire de type MMSE (« Minimum Mean Square Error » pour « minimisation de l'erreur quadratique moyenne »).

8. Dispositif de réception selon l'une quelconque des revendications 5 à 7, **caractérisé en ce que** les coefficients d'au moins un desdits premier et deuxième filtres sont fonction des coefficients d'un filtre de blanchiment (26) d'au moins un signal interférent co-canal et/ou adjacent, ledit filtre de blanchiment (26) tenant compte d'un bruit sur un modèle d'un canal de transmission dudit signal interférent, dit bruit de modèle.

9. Dispositif de réception selon la revendication 8, **caractérisé en ce que**, pour ledit premier filtre $Rx_1$ (41), ledit modèle de canal de transmission tient compte :

- d'un filtre d'émission Tx (21) dudit signal utile et/ou dudit au moins un signal interférent co-canal ;
- d'au moins un canal de propagation dudit signal interférent co-canal dont la fonction de transfert est modélisée par la fonction identité ;
- d'au moins un filtre (24) représentatif d'au moins un traitement radio appliqué audit signal utile en réception, dit filtre radio R.

10. Dispositif de réception selon l'une quelconque des revendications 8 et 9, **caractérisé en ce que**, pour ledit deuxième filtre $Rx_2$ (42), ledit modèle de canal de transmission tient compte :

- d'un filtre d'émission Tx (21) dudit signal utile ;
- d'au moins un filtre d'émission $J_2$ desdits signaux interférents adjacents;
- d'au moins un canal de propagation desdits signaux interférents adjacents dont la fonction de transfert est modélisée par la fonction identité ;
- d'au moins un filtre (24) représentatif d'au moins un traitement radio appliqué audit signal utile en réception, dit filtre radio R ;
- dudit premier filtre $Rx_1$ (41).

11. Dispositif de réception selon la revendication 10, **caractérisé en ce que** ledit filtre de blanchiment d'au moins un signal interférent co-canal, dit premier filtre de blanchiment $W_1$, vérifie l'équation :

$$W_1(z) \cdot W_1^*(1/z^*) = \frac{1}{G_1(z) \cdot G_1^*(1/z^*) + \sigma^2}$$

avec $G_1(z) = R(z) \cdot J_1(z)$,
et $J_1(z) = Tx(z) + \sigma_1$
et **en ce que** ledit filtre de blanchiment d'au moins un signal interférent adjacent, dit second filtre de blanchiment $W_2$, vérifie l'équation :

$$W_2(z) \cdot W_2^*(1/z^*) = \frac{1}{G_2(z) \cdot G_2^*(1/z^*) + \sigma^2}$$

avec $G_2(z) = R(z) \cdot Rx_1(z) \cdot J_2(z)$,

où $\sigma^2$ est la puissance dudit bruit de modèle ;

$\sigma_1^2$ est la puissance dudit bruit blanc thermique ;

$Tx(z)$ est la transformée en $z$ dudit filtre d'émission Tx (21) ;

$R(z)$ est la transformée en $z$ dudit filtre radio R (24) ;

$Rx_1(z)$ est la transformée en $z$ dudit premier filtre $Rx_1$ (41) ;

$J_2(z)$ est la transformée en $z$ dudit filtre d'émission décalé en fréquence.

**Claims**

1. Method for designing a digital reception filter for a main signal, **characterised in that** it includes the steps of:

   - modelling at least one channel for transmission of at least one signal interfering with said main signal, so as to obtain an interfering channel model;
   - whitening of said at least one interfering signal, by means of a whitening filter (26) taking into account said interfering channel model and a noise on said model, referred to as a model noise;
   - calculating coefficients of said digital receiving filter (25) on the basis of least one coefficient of said whitening filter (26).

2. Design method according to claim 1, **characterised in that** the complexity of said digital receiving filter can be parameterised by means of said model noise.

3. Design method according to either one of claims 1 and 2, **characterised in that** said whitening filter (26) is a minimum-phase filter.

4. Design method according to any one of claims 1 to 3, **characterised in that** said modelling step takes into account:

   - at least one filter for transmission (21) of said main signal and/or said at least one interfering signal;
   - at least one channel for propagation of said interfering signal of which the transfer function is modelled by the identity function;
   - at least one filter (24) representing at least one radio processing operation applied to said main signal at the reception, called the radio filter R.

5. Device for receiving a main signal transmitted in a desired frequency band,
   **characterised in that** it has a series filtering architecture making it possible to at least partially eliminate the contribution of at least one disturbance affecting said main signal, including:

   - at least one first filter $Rx_1$ (41) suitable for the disturbances belonging to the group including:

      - at least one interfering signal transmitted in said desired frequency band, called the co-channel interfering signal;
      - at least one thermal white noise;

   - at least one second filter $Rx_2$ (42) suitable for at least one interfering signal transmitted in a frequency band different from said desired frequency band, called an adjacent interfering signal,

   at least one of said first and second filters being designed according to the design method according to any of claims 1 to 4.

6. Receiving device according to claim 5, **characterised in that** it includes means (43) for detecting at least one adjacent interfering signal determining the activation of said second filter $Rx_2$ (42).

7. Receiving device according to either one of claims 5 and 6, **characterised in that** it is linear and of the MMSE type ("Minimum Mean Square Error") .

8. Receiving device according to any one of claims 5 to 7, **characterised in that** the coefficients of at least one of said first and second filters are a function of the coefficients of a filter for whitening (26) at least one co-channel and/or adjacent interfering signal, said whitening filter (26) taking into account a noise on a model of a channel for transmission of said interfering signal, called the model noise.

9. Receiving device according to claim 8, **characterised in that**, for the first filter Rx$_1$ (41), said transmission channel model takes into account:

   - a filter Tx (21) for transmission of said main signal and/or said at least one co-channel interfering signal;
   - at least one channel for propagation of said co-channel interfering signal of which the transfer function is modelled by the identity function;
   - at least one filter (24) representing at least one radio processing operation applied to said main signal at the reception, called the radio filter R.

10. Receiving device according to any one of claims 8 and 9, **characterised in that**, for said second filter Rx$_2$ (42), the transmission channel model takes into account:

   - a filter Tx (21) for transmission of said main signal;
   - at least one filter J$_2$ for transmission of said adjacent interfering signals;
   - at least one channel for propagation of said adjacent interfering signals of which the transfer function is modelled by the identity function;
   - at least one filter (24) representing at least one radio processing operation applied to said main signal at the reception, called the radio filter R;
   - said first filter Rx$_1$ (41).

11. Receiving device according to claim 10, **characterised in that** said filter for whitening at least one co-channel interfering signal, called the first whitening filter W$_1$, verifies the equation:

$$W_1(z) \cdot W_1^*(1/z^*) = \frac{1}{G_1(z) \cdot G_1^*(1/z^*) + \sigma^2}$$

with $G_1(z) = R(z) \cdot J_1(z)$,
and $J_1(z) = Tx(z) + \sigma_1$
and **in that** said filter for whitening at least one adjacent interfering signal, called the second whitening filter W$_2$, verifies the equation:

$$W_2(z) \cdot W_2^*(1/z^*) = \frac{1}{G_2(z) \cdot G_2^*(1/z^*) + \sigma^2}$$

with $G_2(z) = R(z) \cdot Rx_1(z) \cdot J_2(z)$,

   where $\sigma^2$ is the power of said model noise;
   $\sigma_1^2$ is the power of said thermal white noise;
   $Tx(z)$ is the $z$-transform of said transmission filter Tx (21);
   $R(z)$ is the $z$-transform of said radio filter R (24);
   $Rx_1(z)$ is the $z$-transform of said first filter Rx$_1$ (41);
   $J_2(z)$ is the z-transform of said frequency-shifted transmission filter.

**Patentansprüche**

1. Verfahren zur Entwicklung eines digitalen Empfangsfilters für ein Nutzsignal, **dadurch gekennzeichnet, dass** es folgende Schritte umfasst:

   - Modellierung von mindestens einem Übertragungskanal für mindestens ein mit dem Nutzsignal interferierendes Signal, so dass ein Interferenzkanalmodell erhalten wird;
   - Dekorrelation dieses mindestens einen Interferenzsignals mit Hilfe eines Dekorrelationsfilters (26), welches das Interferenzkanalmodell und ein Rauschen in dem Modell, das so genannte Modellrauschen, berücksichtigt;
- Berechnung der Koeffizienten des digitalen Empfangsfilters (25) anhand von mindestens einem Koeffizienten des Dekorrelationsfilters (26).

2. Entwicklungsverfahren nach Anspruch 1, **dadurch gekennzeichnet, dass** sich die Komplexität des digitalen Empfangsfilters mit Hilfe des Modellrauschens parametrieren lässt.

3. Entwicklungsverfahren nach einem beliebigen der Ansprüche 1 und 2, **dadurch gekennzeichnet, dass** das Dekorrelationsfilter (26) minimalphasig ist.

4. Entwicklungsverfahren nach einem beliebigen der Ansprüche 1 bis 3, **dadurch gekennzeichnet, dass** bei dem Modellierungsschritt Folgendes berücksichtigt wird:

- mindestens ein Sendefilter (21) für das Nutzsignal und/oder mindestens ein Interferenzsignal;
- mindestens ein Ausbreitungskanal für das Interferenzsignal, dessen Übertragungsfunktion durch die Identitätsfunktion modelliert wird;
- mindestens ein Filter (24), das für mindestens eine Funkverarbeitung repräsentativ ist, die auf das Nutzsignal beim Empfangen angewandt wird, das so genannte Funkfilter R.

5. Empfangsvorrichtung für ein Nutzsignal, das in einem Nutzfrequenzband gesendet wird,
**dadurch gekennzeichnet, dass** sie eine serielle Filterarchitektur aufweist, die es ermöglicht, den Beitrag von mindestens einer Störung am Nutzsignal zumindest teilweise zu beseitigen, wobei die Vorrichtung umfasst:

- mindestens ein erstes Filter $Rx_1$ (41), das für die Störungen der Gruppe geeignet ist, welche umfasst:

- mindestens ein Interferenzsignal, das im Nutzfrequenzband gesendet wird, das so genannte Co-Kanal-Interferenzsignal,
- mindestens ein thermisches weißes Rauschen,

- mindestens ein zweites Filter $Rx_2$ (42), das für mindestens ein Interferenzsignal geeignet ist, welches in mindestens einem vom Nutzfrequenzband verschiedenen Frequenzband gesendet wird, das sogenannte angrenzende Interferenzsignal,

wobei mindestens eines der ersten oder zweiten Filter nach dem Entwicklungsverfahren nach einem beliebigen der Ansprüche 1 bis 4 entwickelt wurde.

6. Empfangsvorrichtung nach Anspruch 5, **dadurch gekennzeichnet, dass** sie Mittel zur Detektion (43) von mindestens einem angrenzenden Interferenzsignal umfasst, die die Aktivierung des zweiten Filters $Rx_2$ (42) bedingen.

7. Empfangsvorrichtung nach einem beliebigen der Ansprüche 5 und 6, **dadurch gekennzeichnet, dass** es eine lineare Vorrichtung des Typs MMSE ist ("Minimum Mean Square Error" für "kleinster mittlerer quadratischer Fehler").

8. Empfangsvorrichtung nach einem beliebigen der Ansprüche 5 bis 7, **dadurch gekennzeichnet, dass** die Koeffizienten von mindestens einem der ersten und zweiten Filter von den Koeffizienten eines Dekorrelationsfilters (26) für mindestens ein Co-Kanal- und/oder angrenzendes Interferenzsignal abhängig sind, wobei das Dekorrelationsfilter (26) ein Rauschen in einem Modell eines Übertragungskanals für das Interferenzsignal, das so genannte Modellrauschen, berücksichtigt.

9. Empfangsvorrichtung nach Anspruch 8, **dadurch gekennzeichnet, dass** dieses Übertragungskanalmodell beim ersten Filter $Rx_1$ (41) Folgendes berücksichtigt:

- ein Sendefilter Tx (21) für das Nutzsignal und/oder mindestens ein Co-Kanal-Interferenzsignal;
- mindestens einen Ausbreitungskanal für das Co-Kanal-Interferenzsignal, dessen Übertragungsfunktion durch die Identitätsfunktion modelliert wird;
- mindestens ein Filter (24), das für mindestens eine Funkverarbeitung repräsentativ ist, die auf das Nutzsignal beim Empfangen angewandt wird, das so genannte Funkfilter R.

10. Empfangsvorrichtung nach einem beliebigen der Ansprüche 8 und 9, **dadurch gekennzeichnet, dass** das Über-

tragungskanalmodell beim zweiten Filter $Rx_2$ (42) Folgendes berücksichtigt:

- ein Sendefilter Tx (21) für das Nutzsignal;
- mindestens ein Sendefilter $J_2$ für die angrenzenden Interferenzsignale;
- mindestens einen Ausbreitungskanal für die angrenzenden Interferenzsignale, dessen Übertragungsfunktion durch die Identitätsfunktion modelliert wird;
- mindestens ein Filter (24), das für mindestens eine Funkverarbeitung repräsentativ ist, die auf das Nutzsignal beim Empfangen angewandt wird, das so genannte Funkfilter R;
- das erste Filter $Rx_1$ (41).

11. Empfangsvorrichtung nach Anspruch 10, **dadurch gekennzeichnet, dass** das Dekorrelationsfilter für mindestens ein Co-Kanal-Interferenzsignal, das so genannte Dekorrelationsfilter $W_1$, die folgende Gleichung überprüft:

$$W_1(z) \cdot W_1^*(1/z^*) = \frac{1}{G_1(z) \cdot G_1^*(1/z^*) + \sigma^2}$$

mit $G_1(z) = R(z) \cdot J_1(z)$,
und $J_1(z) = Tx(z) + \sigma_1$
und dass das Dekorrelationsfilter für mindestens ein angrenzendes Interferenzsignal, das so genannte Dekorrelationsfilter $W_2$, die folgende Gleichung überprüft:

$$W_2(z) \cdot W_2^*(1/z^*) = \frac{1}{G_2(z) \cdot G_2^*(1/z^*) + \sigma^2}$$

mit $G_2(z) = R(z) \cdot Rx_1(z) \cdot J_2(z)$,
wobei $\sigma^2$ die Leistung des Modellrauschens ist;
$\sigma_1^2$ die Leistung des thermischen weißen Rauschens ist;
$Tx(z)$ die z-Transformierte des Sendefilters Tx (21) ist;
$R(z)$ die z-Transformserte des Funkfilters R (24) ist;
$Rx_1(z)$ die z-Transformierte des ersten Filters $Rx_1$ (41) ist,
$J_2(z)$ die z-Transformierte des frequenzverschobenen Sendefilter ist.

BBAG

x(k) → H → ⊕ → Rx → y(k)

11  12  13

Fig. 1

BBAG

J  23

x(k) → Tx → ⊕ → R → Rx → y(k)

21  24  22  25

Fig. 2A

Fig. 2B

Fig. 3

Fig. 4

Fig. 5A

Fig. 5B

Fig. 6A

Fig. 6B

canal
adjacent
gauche

canal
principal

canal
adjacent
droit

-100kHz

100kHz

135kHz=0.5fs

200kHz

71

71

**Fig. 7A**

canal
adjacent
gauche

canal
principal

canal
adjacent
droit

-100kHz

100kHz

135kHz=0.5fs

200kHz

72

72

**Fig. 7B**

Fig. 8

filtre Rx1

Fig. 9A

filtre Rx1

Fig. 9B

filtre Rx1

Fig. 9C

filtre Rx2

Fig. 10A

filtre Rx2

Fig. 10B

filtre Rx2

Fig. 10C

**EP 1 774 660 B1**

**RÉFÉRENCES CITÉES DANS LA DESCRIPTION**

**Documents brevets cités dans la description**

- US 6590932 B

- US 20040028155 A